(19) **Europäisches Patentamt / European Patent Office / Office européen des brevets**

(11) **EP 1 817 631 B1**

(12) **FASCICULE DE BREVET EUROPEEN**

(45) Date de publication et mention
de la délivrance du brevet:
**07.09.2011 Bulletin 2011/36**

(21) Numéro de dépôt: **05813347.1**

(22) Date de dépôt: **29.11.2005**

(51) Int Cl.:
*G03B 21/28* (2006.01)    *G03B 21/10* (2006.01)
*G02B 17/06* (2006.01)    *G02B 17/08* (2006.01)
*G02B 13/16* (2006.01)

(86) Numéro de dépôt international:
**PCT/EP2005/056318**

(87) Numéro de publication internationale:
**WO 2006/058884 (08.06.2006 Gazette 2006/23)**

(54) **Système de projection à repli pour projecteur frontal ou rétroprojecteur**

Projektionssystem mit gefaltetem Strahlengang für einen Front-oder Rückprojektor

Folded projection system for a front or rear projector

(84) Etats contractants désignés:
**DE FR GB**

(30) Priorité: **03.12.2004 FR 0412904**

(43) Date de publication de la demande:
**15.08.2007 Bulletin 2007/33**

(73) Titulaire: **Thomson Licensing SAS
92130 Issy-les-Moulineaux (FR)**

(72) Inventeurs:
• **BENOIT, Pascal
F-35340 LIFFRE (FR)**

• **SACRE, Jean-Jacques
F-35410 CHATEAUGIRON (FR)**
• **LOAEC, Frédéric
F-91190 Gif sur Yvette (FR)**

(74) Mandataire: **Le Dantec, Claude
Technicolor
1-5 rue Jeanne d'Arc
92130 Issy-les-Moulineaux (FR)**

(56) Documents cités:
**EP-A- 1 203 977    US-A- 5 716 118
US-A- 5 911 490    US-A1- 2004 184 009
US-B1- 6 485 145    US-B1- 6 771 427**

EP 1 817 631 B1

**Description**

## 1. Domaine de l'invention.

L'invention se rapporte au domaine de la projection d'image.

Plus précisément, l'invention concerne le repli d'un faisceau d'imagerie dans un vidéo projecteur de type projecteur frontal ou rétro-projecteur.

## 2. Etat de l'art.

Selon l'état de la technique, des projecteurs présentent l'inconvénient d'être relativement encombrants.

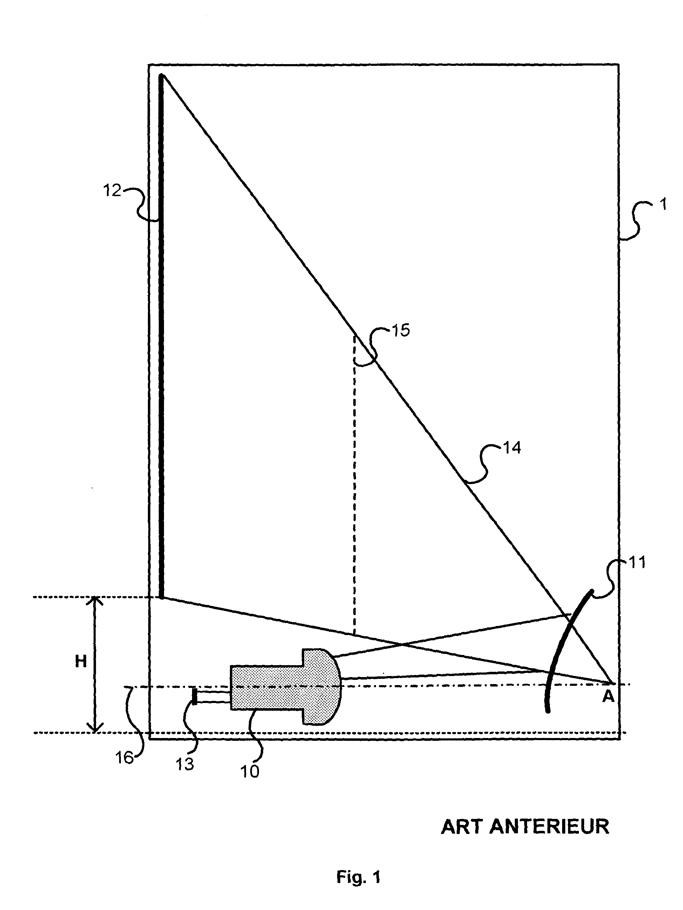

Afin de réduire leur volume, on prévoit un projecteur 1 avec miroir hyperbolique convexe, tel qu'illustré sous forme éclatée en regard de la **figure 1**, et qui comprend :

- une source d'imagerie 13 ;
- un objectif 10 éclairé par un faisceau d'imagerie produit par la source 13 ;
- un miroir asphérique convexe 11 qui agrandit l'image tout en repliant le faisceau ;
- un miroir de repli 15 ; et
- un écran de rétroprojection 12.

L'objectif transmet un faisceau d'imagerie 14 vers le miroir asphérique convexe 11 qui transmet lui même un faisceau réfléchi vers le miroir de repli 15 qui réfléchit le faisceau vers l'écran 12 (afin de rendre la figure 1 plus lisible, le faisceau 14 a été représenté non replié par le miroir 15). Le miroir 11 est tel que, vu de l'écran 12, le faisceau semble provenir d'une zone pupillaire A située derrière le miroir 11. Un tel projecteur est décrit de manière plus détaillée dans le document de demande de brevet européen publié sous le numéro EP1203977 A1.

Le rétroprojecteur de la figure 1 présente l'inconvénient d'avoir une hauteur H sous écran relativement élevée, typiquement supérieure à 30 cm. Cette hauteur est en effet nécessaire pour loger l'objectif 10 et former une image correcte sur l'écran 12 sans que le faisceau d'imagerie ne rencontre l'objectif 10.

Les documents US 6 485 145 B1 et US 6 771 427 B1 divulguent des systèmes de projection utilisant un miroir concave.

## 3. Résumé de l'invention.

L'invention a pour but de pallier ces inconvénients de l'art antérieur.

Plus particulièrement, l'invention a pour objectif de réduire la hauteur sous l'écran de rétroprojection (« chin » en anglais) ou la distance de projection dans le cas d'un projecteur frontal tout en conservant un chin petit (ici distance entre le niveau le plus haut du projecteur et le niveau haut de l'écran si le projecteur est situé au dessus de l'écran).

A cet effet, l'invention propose un système de projection selon la revendication 1.

Préférentiellement, le miroir concave est asphérique.

Selon une caractéristique particulière, le système comprend au moins un premier miroir de repli plan entre l'objectif et le miroir concave.

Avantageusement, l'objectif comprend :

- un diaphragme ;
- un premier ensemble de lentilles ; et
- un second ensemble de lentilles,
- le second ensemble étant positionné après le diaphragme sur le trajet du faisceau d'imagerie et étant plus proche de la première image que du diaphragme.

Selon une caractéristique préférée, la distance entre le second ensemble et la pupille de sortie du premier ensemble est supérieure ou égale à trois fois la distance entre le premier ensemble et la source d'imagerie.

Selon une caractéristique avantageuse, le second ensemble de lentilles comprend au moins une lentille de type ménisque.

Selon une caractéristique particulière, le second ensemble est positionné entre le premier ensemble et le premier miroir de repli.

Selon une autre caractéristique, le second ensemble est positionné entre le premier miroir de repli et le miroir concave.

Avantageusement, dans une représentation sans miroir de repli plan du système, l'axe optique du faisceau d'imagerie est perpendiculaire au plan de projection étant vertical lorsque le faisceau d'imagerie frappe le miroir concave.

Préférentiellement, le système comprend un écran de rétroprojection dans le plan de projection.

Avantageusement, le système comprend en outre au moins un deuxième miroir de repli plan positionné sur le trajet du faisceau d'imagerie entre le miroir concave et le écran de rétroprojection.

Selon une autre caractéristique avantageuse, le système comprend des moyens de projection frontale sur le plan de projection.

Avantageusement, l'objectif comprend un groupe avant comprenant trois lentilles, la lentille située au milieu ayant une puissance opposée aux lentilles extrêmes. Ainsi, le groupe avant comprend, par exemple, deux lentilles convergentes encadrant une lentille divergente ou deux lentilles divergentes encadrant une lentille convergente.

Préférentiellement, le système comprend un masque comprenant une zone noire absorbant les rayons parasites et une zone transparente placée sur le trajet du faisceau d'imagerie après le miroir concave.

Selon des caractéristique particulière, la zone transparente est pleine ou correspond à un évidement du masque.

Selon une caractéristique préférée, la zone transparente est positionnée à proximité de la pupille de sortie du système comprenant l'objectif et le miroir concave.

## 4. Liste des figures.

L'invention sera mieux comprise, et d'autres particularités et avantages apparaîtront à la lecture de la description qui va suivre, la description faisant référence aux dessins annexés parmi lesquels :

- la figure 1 illustre un rétroprojecteur connu en soi ;
- les figures 2 , 3a et 3b sont des synoptiques très schématiques d'un rétro-projecteur selon un mode de réalisation de l'invention ;
- la figure 4 est un synoptique très schématique d'un rétro-projecteur selon une variante de réalisation de l'invention ;
- la figure 5 présente les différentes images formées par le rétro-projecteur des figures 2 à 4 ;
- la figure 6 illustre les propriétés optiques du rétro-projecteur des figures 2 à 4 ;
- les figures 7 à 9 présente un rétroprojecteur selon une variante de l'invention ;
- la figure 10 illustre un projecteur frontal selon un mode de réalisation particulier de l'invention ;
- les figures 11 et 22 présentent un objectif mis en oeuvre dans le projecteur de la figure 2 ;
- les figures 12 et 13 sont des synoptiques très schématiques d'un rétro-projecteur selon une variante de réalisation de l'invention mettant en oeuvre un masque ;
- la figure 14 présente un synoptique très schématique d'un projecteur frontal selon une variante de réalisation de l'invention mettant en oeuvre un masque ; et
- les figures 15 à 21 illustre le masque mis en oeuvre dans les projecteurs des figures 12 à 14 selon plusieurs variantes de l'invention.

## 5. Description détaillée de l'invention.

Le principe général de l'invention repose donc sur l'utilisation d'un miroir de repli concave dans un rétroprojecteur ce qui permet de réduire la hauteur sous écran.

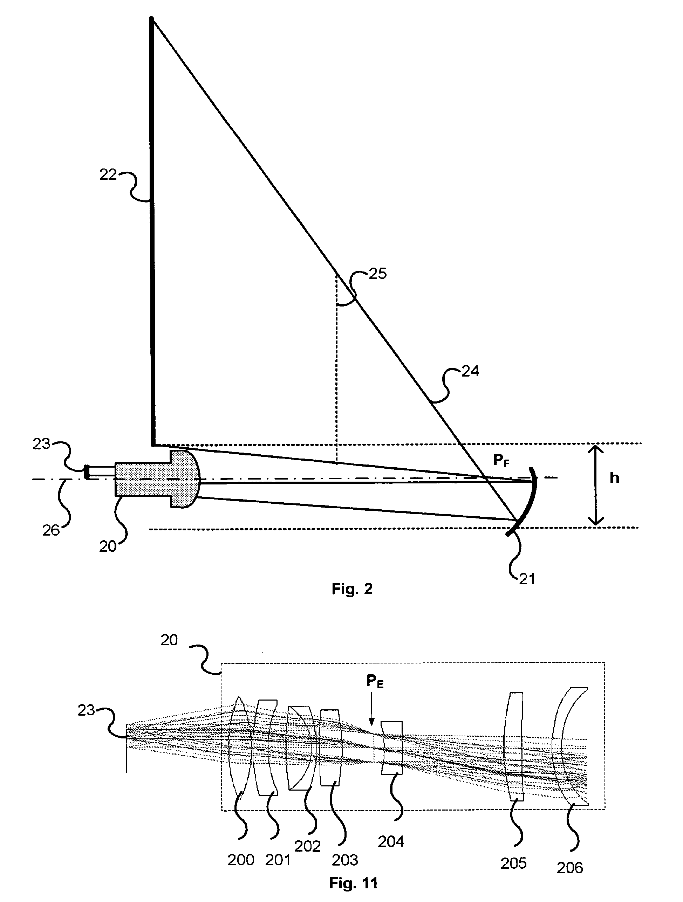

La **figure 2** illustre un rétroprojecteur avec miroir asphérique concave, sous une forme éclatée , et qui comprend :

- une source d'imagerie 23 (typiquement un imageur éclairé par un faisceau d'illumination) ;
- un objectif 20 éclairé par un faisceau d'imagerie produit par la source 23 ;
- un miroir asphérique concave 21 qui agrandit l'image tout en repliant le faisceau ;
- un miroir de repli 25 ; et
- un écran de rétroprojection 22.

L'imageur est, par exemple, un DMD (« Appareil à Micromiroirs Numériques » de l'anglais « Digital Micromirrors Device » de la société Texas Instruments ®), un LCD transmissif (Afficheur à cristaux liquides, de l'anglais « Liquid Crystal Display ») ou un LCOS (Cristal liquide sur du silicium de l'anglais « Liquid Crystal On Silicon »).

L'objectif 20 transmet un faisceau d'imagerie 24 vers le miroir asphérique concave 21 qui transmet lui même un faisceau réfléchi vers le miroir de repli 25 qui réfléchit le faisceau vers un plan de projection où est positionné l'écran 22 (afin de rendre la figure 2 plus lisible, le faisceau 24 a été représenté non replié par le miroir 25). La partie optique du projecteur possède un axe optique 26, le faisceau optique produit 24 étant décentré (et donc l'imageur) par rapport à cet axe 26. Le miroir 11 est tel que, vu de l'écran 12, le faisceau semble provenir d'une zone pupillaire, correspondant à une pupille PF située entre le miroir 21 et l'écran 22 sur le trajet du faisceau d'imagerie 24.

Le miroir asphérique concave 21 a une forme de révolution dont la surface réfléchissante suit l'équation de surface asphérique suivante :

$$Z(r) = \frac{r^2/R}{1+\sqrt{1-(1+c)\left(r/R\right)^2}} + a_1 r + a_2 r^2 + a_3 r^3 + a_4 r^4 + a_5 r^5 + a_6 r^6 + \ldots$$

où :

- $r$ représente la distance à l'axe optique pour un point donné, l'axe du miroir 21 étant positionné sur l'axe optique de l'objectif ;
- $Z$ représente la distance de ce point à un plan perpendiculaire à l'axe optique;
- le coefficient c est la conique
- le paramètre $R$ correspond au rayon de courbure de la surface ;
- les paramètres $a1$, $a2$, ....$ai$ sont des coefficients d'asphéricité respectivement d'ordre 1, 2 et $i$.

La **figure 11** présente plus en détail l'objectif 20.

L'objectif 20 comprend un groupe arrière de lentilles 201 à 203 et un groupe avant de lentilles 204 à 206.

La dernière lentille 206 de l'objectif 20, sur le trajet du faisceau d'imagerie est préférentiellement une lentille de type ménisque asphérique dont la forme est adaptée aux paramètres du miroir concave 21 ; sa forme suit donc préférentiellement une équation de surface asphérique comme présenté précédemment.

A titre illustratif, dans un mode de réalisation particulier le rayon R du miroir concave 21 est égal à 60, les paramètres $c$, et $a1$ à $a8$ valent respectivement -1,59311mm ; 0 ; 0 ; $-8,9410^{-6}$ ; 0 ; $1,64.10^{-9}$ ; $-9,74.10^{-13}$; $-7,84.10^{-14}$ et $2,31.10^{-16}$. Le rayon R de la première surface (coté imageur) du ménisque 206 est égal à 44,94711mm, les paramètres $c$, et $a1$ à $a8$ valent respectivement 0 ; 0 ; 0 ; $-3,110^{-4}$ ; $2,88.10^{-5}$ ; $1,96.10^{-6}$ ; $7,14.10^{-8}$ ; $4,15.10^{-10}$ et $-4,30.10^{-10}$. Le rayon R de la deuxième surface (coté imageur) du ménisque 206 est égal à 29.49554mm, les paramètres $c$, et $a1$ à $a8$ valent respectivement 0 ; 0 ; 0 ; $-2,710^{-4}$ ; $9,97.10^{-6}$ ; $6,34.10^{-7}$ ; $-1,41.10^{-7}$; $8,98.10^{-9}$ et $-1,78.10^{-10}$.

Avantageusement, selon l'invention, le groupe avant de lentilles comprend trois lentilles, les deux lentilles situées dans les positions extrêmes ayant une puissance opposées à la lentille située au milieu. Ainsi, le groupe avant contribue à la génération d'une courbure de l'image intermédiaire pour que l'image projetée soit plane, tout en comprenant un nombre de lentilles faibles, ce qui en facilite la fabrication et en réduit le coût.

Ainsi, le groupe avant de lentilles illustré en figure 11 comprend deux lentilles à puissance négative 204 et 106 (lentilles divergentes) entourant une lentille à puissance positive 205 (lentille convergentes).

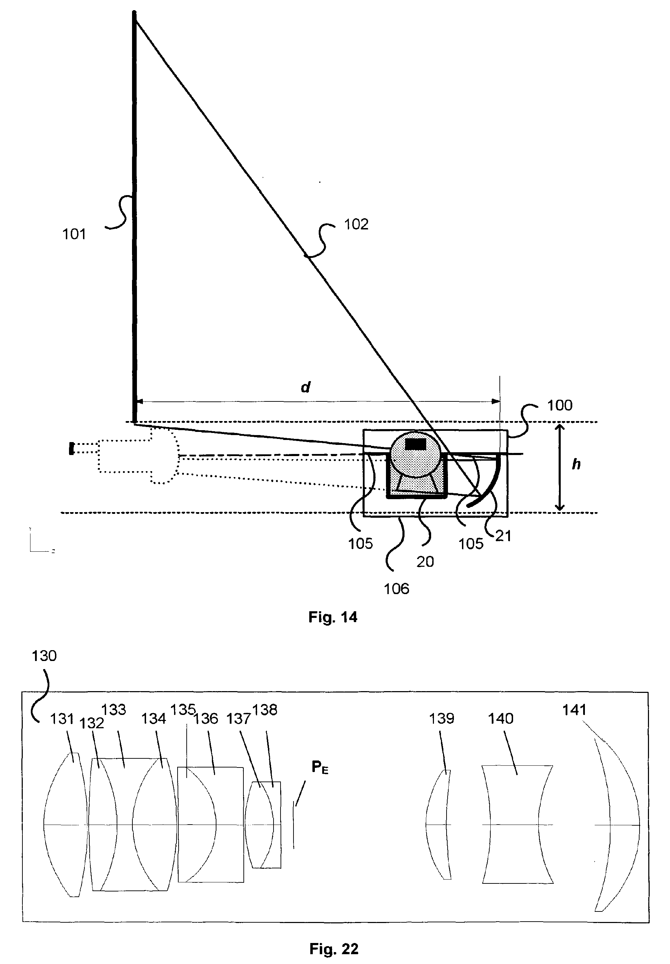

Selon une variante de l'invention, le groupe avant de lentilles de l'objectif comprend deux lentilles positives (convergente) entourant une lentille négative. Un objectif 130 comprenant un tel groupe avant et pouvant remplacé l'objectif 20 est illustré en **figure 22**.

L'objectif 130 comprend un groupe arrière de lentilles 131 à 138 et un groupe avant de lentilles 139 à 141, placés de part et d'autres de la pupille de sortie PS de l'objectif.

A titre illustratif, les caractéristiques de l'objectif 130, sont résumées dans le tableau suivant (les rayons, épaisseur et diamètre étant exprimé en millimètres et la matière des lentilles 132 à 141 correspondant aux références des produits fournis par la société OHARA®) :

| Lentille | Rayon de courbure (en mm) | Epaisseur (en mm) | Matière | Diamètre (en mm) |
|---|---|---|---|---|
| 131 | 36,43399 | 16,245 | acrylique | 48 |
| | -104,8294 | 0,500 | | 48 |
| 132 | 206,176 | 9,538 | | 46 |
| 133 | -48,868 | 5,389 | | 46 |
| 134 | 33,95 | 14,933 | | 46 |
| | -83,67 | 0,500 | | 46 |
| 135 | Infini | 12,658 | | 36 |
| 136 | -22,648 | 2,626 | | 36 |

(suite)

| Lentille | Rayon de courbure (en mm) | Epaisseur (en mm) | Matière | Diamètre (en mm) |
|---|---|---|---|---|
| | Infini | 0,500 | | 36 |
| 137 | 47,785 | 9,381 | | 28 |
| 138 | -27,09 | 2,493 | | 28 |
| | Infini | 5,974 | | 28 |
| PS | Infini | 41,998 | | 16,58 |
| 139 | 33,768 | 6,849 | | 38 |
| | 120,842 | 14,926 | | 38 |
| 140 | -77,81 | 16,188 | | 41 |
| | 46,246 | 24,299 | | 41 |
| 141 | -86,258 | 9,816 | | 60 |
| | -41,781 | - | | 60 |

Le rétroprojecteur de la figure 2 présente l'avantage d'avoir une hauteur *h* sous écran relativement faible, typiquement comprise entre 10 et 20 cm pour un écran de diagonale d'environ 1,50m. Cette hauteur *h* est en effet suffisante pour loger l'objectif 20 et le miroir 21 tout en formant une image correcte sur l'écran 22 sans que le faisceau d'imagerie 24 ne rencontre l'objectif 20. Préférentiellement, la hauteur *h* est égale au cinquième (environ) de la hauteur de l'écran ; plus précisément, la hauteur h est inférieure ou égale à la hauteur de l'écran divisé par 5.

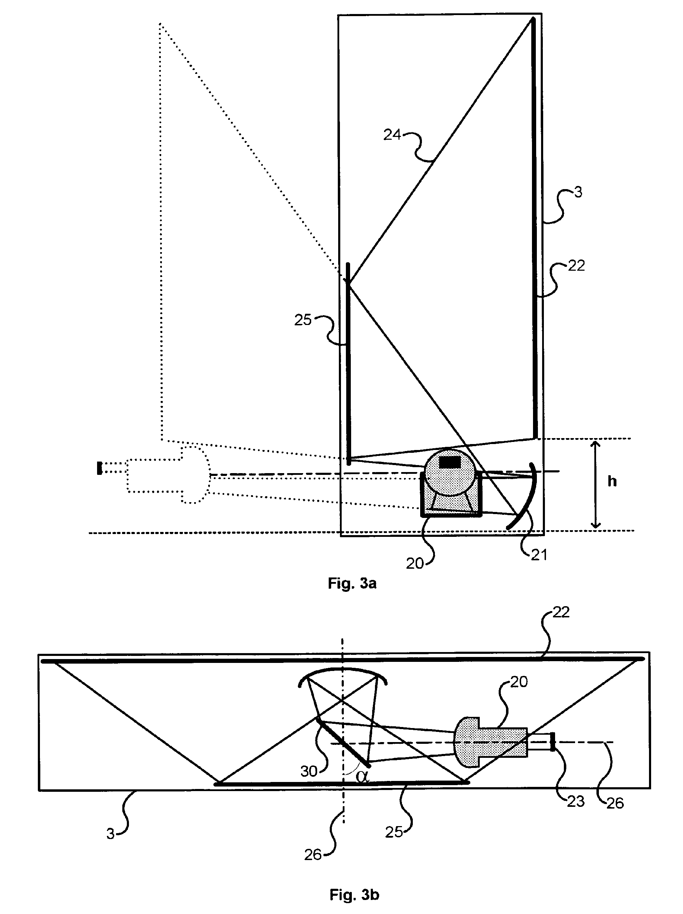

Les **figures 3a et 3b** illustrent respectivement une vue de coté et une vue de dessus du rétroprojecteur 3 tel que représenté schématiquement en regard de la figure 2.

Afin de réduire la profondeur du rétroprojecteur 3, un miroir de repli 30 est intercalé entre l'objectif 20 et le miroir concave 21. Les traits en pointillés (respectivement en traits pleins) représentent respectivement les éléments avec le faisceau 24 non replié (respectivement replié). Le miroir 30 est vertical (c'est-à-dire parallèle à l'écran 22), l'axe optique du faisceau 24 avant le miroir 21 étant horizontal. Le grand coté de l'imageur 23 du rétroprojecteur 3 est horizontal (pour un écran de projection 22 vertical, dont le grand coté est horizontal).

L'objectif 20 est placé sur le coté et replié préférentiellement dans un plan horizontal et placé sur le coté, préférentiellement avec un axe parallèle à l'écran 22 ce qui permet de réduire la profondeur du rétro-projecteur 3. L'angle α que fait le miroir 30 avec une normale à l'écran 22 dépend de l'angle que fait l'axe optique de l'objectif 20 avec l'écran 22. Lorsque l'objectif 20 est parallèle à l'écran, l'angle α vaut 45°. La distance entre l'objectif 20 et le miroir 30 est telle que le faisceau 24 ne rencontre pas l'objectif 20.

D'une manière générale, tous les axes optiques des différents éléments du système de projection déplié sont perpendiculaires au plan de projection supposé vertical ; ils sont donc horizontaux (pour un système représentée sous une forme dépliée (à l'exception du pliage du au miroir de repli concave)).

Dans le projecteur 3, l'axe réel de l'objectif 20 reste, horizontal l'écran 22 étant vertical. Le projecteur 3 présente un « chin », c'est-à-dire une valeur de *h*, relativement faible.

Néanmoins, selon des variantes de réalisation qui peuvent permettre le logement plus facile de la partie illumination (inclinaison du coeur optique d'illumination, boitier de lampe, carte électronique rattachée à l'imageur 23), l'axe réel de l'objectif est incliné. En effet, l'axe d'un élément du système de projection peut devenir non horizontal après un pliage par un miroir de repli. Par exemple si le grand miroir est incliné, tous les éléments suivants seront aussi inclinés de l'angle double, en particulier le miroir concave.

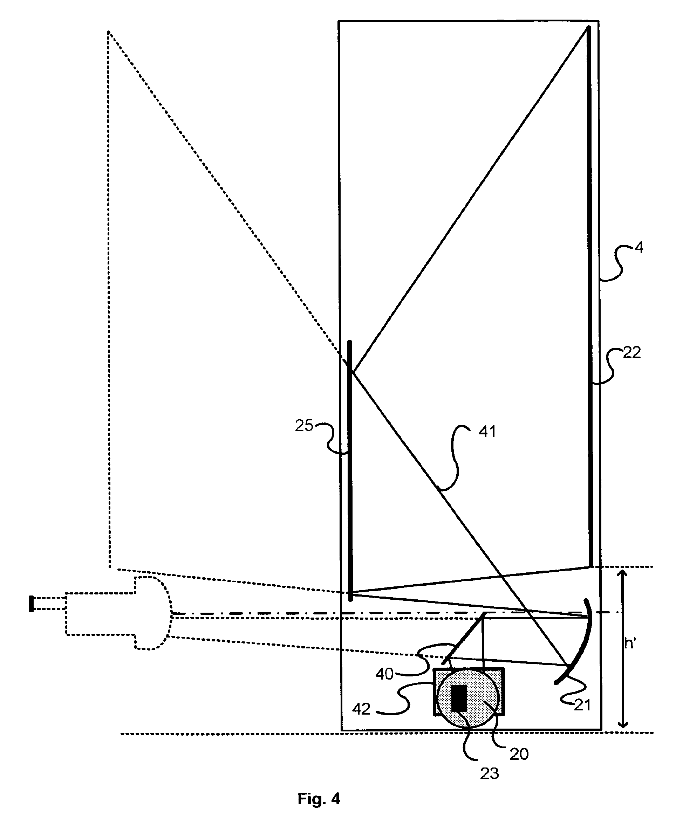

Ainsi, la **figure 4** illustre un rétroprojecteur 4 selon une variante de l'invention avec deux miroirs de repli 40 et 42. Le rétroprojecteur 4 comprend des éléments similaires aux composants du rétroprojecteur 3, qui portent les mêmes références (notamment source d'imagerie 23, objectif 20, miroir concave 21, miroir de repli 25 et écran 22).

Les deux miroirs de repli 40 et 42 sont positionnés entre l'objectif 20 et le miroir 21. L'axe de l'objectif 20 du rétroprojecteur 4 plié n'est pas horizontal. Le faisceau d'imagerie issu de l'objectif 20 éclaire d'abord le miroir 42, incliné à 45°, par rapport à l'axe optique et perpendiculaire à l'écran 4 : le faisceau est ainsi renvoyé dans une direction parallèle à l'écran 4, son axe optique étant dans un plan normal à l'écran 4. Ensuite, le faisceau réfléchi par le miroir 42 éclaire le miroir 40, incliné à 45°, par rapport à l'axe optique et dont la normale est perpendiculaire à l'écran 4 : le faisceau est ainsi renvoyé dans une direction perpendiculaire à l'écran 4 pour éclairer le miroir concave 21.

Selon une variante de l'invention, l'axe de l'objectif 20 du rétroprojecteur 4 plié n'est pas horizontal, le rétro-projecteur 4 comprenant un ou pluisieurs miroirs de repli positionnés entre l'objectif et le miroir concave 21, pour renvoyer le faisceau dans une direction sensiblement perpendiculaire et préférentiellement perpendiculaire à l'écran 22.

Selon d'autres variantes de réalisation de l'invention, l'axe du faisceau d'imagerie éclairant le miroir concave positionné après la première image sur le trajet du faisceau d'imagerie n'est pas horizontal. La forme du miroir concave est alors calculée pour construire une seconde image sur un plan de projection correspondant à l'écran de projection.

Le grand coté de l'imageur 23 du rétroprojecteur 4 est vertical (pour un écran de projection 22 vertical avec un grand coté horizontal).

Le rétroprojecteur 4 permet d'éliminer la contrainte de taille des lentilles de l'objectif 20 pour qu'il ne coupe pas le faisceau 41 de retour du miroir 21. Selon la configuration du rétroprojecteur 4, on peut également mettre en oeuvre des lentilles plus grosses car on est sous le faisceau 41 (on a une séparation plus facile des champs).

Préférentiellement, la hauteur $h'$ sous écran du rétroprojecteur 4 est égale au cinquième (environ) de la hauteur de l'écran ; plus précisément, la hauteur $h'$ est inférieure ou égale à la hauteur de l'écran divisé par 5. Elle peut également dépendre du grandissement de l'objectif 20 ou du miroir concave 21, et du système d'illumination (taille du réflecteur de la lampe). Ainsi, pour un projecteur avec écran de 50" et DMD HD3, la hauteur $h'$ est, par exemple, inférieure à 20 cm et typiquement égale à 12 cm.

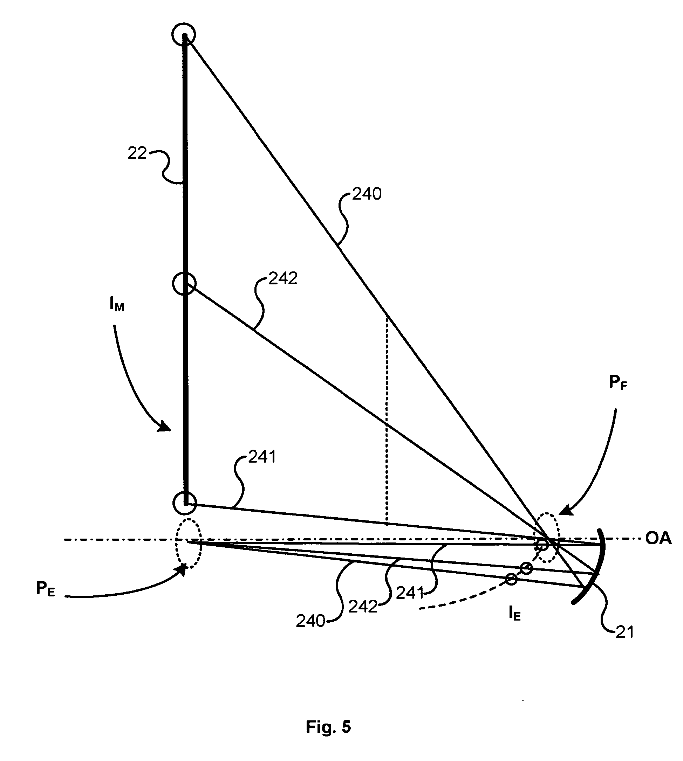

La **figure 5** présente les différentes images formées par le rétro-projecteur 3 ou 4 (les faisceaux d'imagerie étant représentés dépliés).

Le rayon 242 représente le rayon central du faisceau d'imagerie 24 et les rayons 240 et 241 deux rayons extrêmes.

La pupille de sortie $PS$ de l'objectif 20 forme une image $IS$ située avant le miroir 21 sur le trajet du faisceau 24. L'objectif 20 agrandit l'image objet formée sur l'imageur 23 pour former l'image $IS$ d'un facteur de grandissement $G$. Le facteur de grandissement G associé à l'objectif 20 est préférentiellement compris entre 1 et 10, et encore plus préférentiellement entre 5 et 9.

Le miroir 21 associe la pupille de sortie $PS$ à une pupille $PF$ où les rayons du faisceau d'imagerie se croisent dans une zone relativement réduite. La forme du miroir 21 est calculée pour créer une image $IF$ correspondant à l'image $IS$ projetée sur un plan de projection où est situé l'écran de 22. Le miroir concave 21 agrandit l'image $IS$ pour former l'image IF d'un facteur d'agrandissement $G'$. Le facteur de grandissement $G'$ associé au miroir concave 21 est préférentiellement supérieur au facteur de grandissement $G$ associé à l'objectif 20.

L'utilisation d'un miroir concave 21 positionné après la première image sur le trajet dudit faisceau d'imagerie présente l'avantage que la partie basse du faisceau d'imagerie correspondant au rayon 241 est relativement haute (par rapport au rayon correspondant sur la figure 1) et permet donc de loger plus facilement des éléments optiques proche de l'écran (dans le cas d'un rétroprojecteur) et ne perturbant pas la propagation des faisceaux entre le miroir concave et l'écran.

Selon une variante de réalisation, Le facteur de grandissement $G'$ associé au miroir concave 21 est supérieur à 10.

Le miroir concave 21 est préférentiellement situé en dessous de l'axe optique. Préférentiellement, l'axe optique du système avant le miroir concave 21 est horizontal et proche du point bas de l'écran 22.

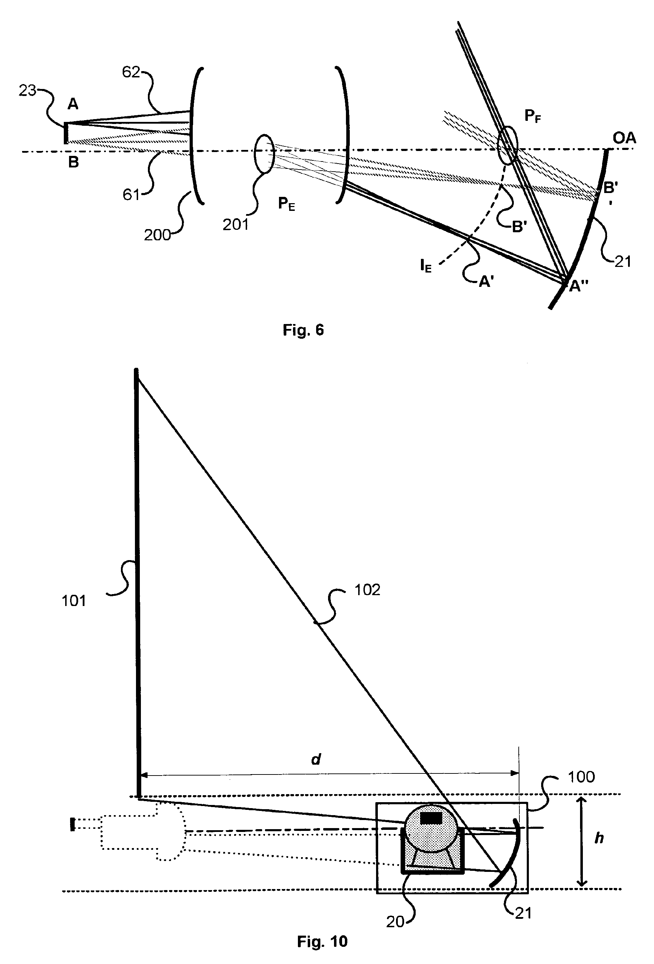

La **figure 6** illustre les propriétés optiques du rétroprojecteur 3. Plus précisément, le système d'imagerie 23 crée une première image comprenant deux points $A$ et $B$ indiqués à titre illustratif. De ces deux points $A$ et $B$, sont issus respectivement deux faisceaux 62 et 61 qui forment après passage dans l'objectif 20 comprenant au moins une lentille 200 et une pupille de sortie $PS$ 201 deux points $A'$ et $B'$ appartenant à l'image $IS$ créée par l'objectif 20.

Les faisceaux 62 et 61 se réfléchissent respectivement dans des zones $A''$ et $B''$ non ponctuelles sur le miroir 21 et convergent dans une zone correspondant à la pupille $PF$, image de la pupille $PS$ par le miroir 21.

On note que la pupille $PF$ est relativement proche du miroir 21 et que la pupille $PS$ est plus éloignée du miroir 21. Typiquement, la distance de la zone pupillaire de sortie $PF$ au vertex du miroir concave 21 est compris entre 25 mm et 60 mm. Préférentiellement, la distance de pupille de sortie 201 au miroir concave 21 doit être la plus grande possible.

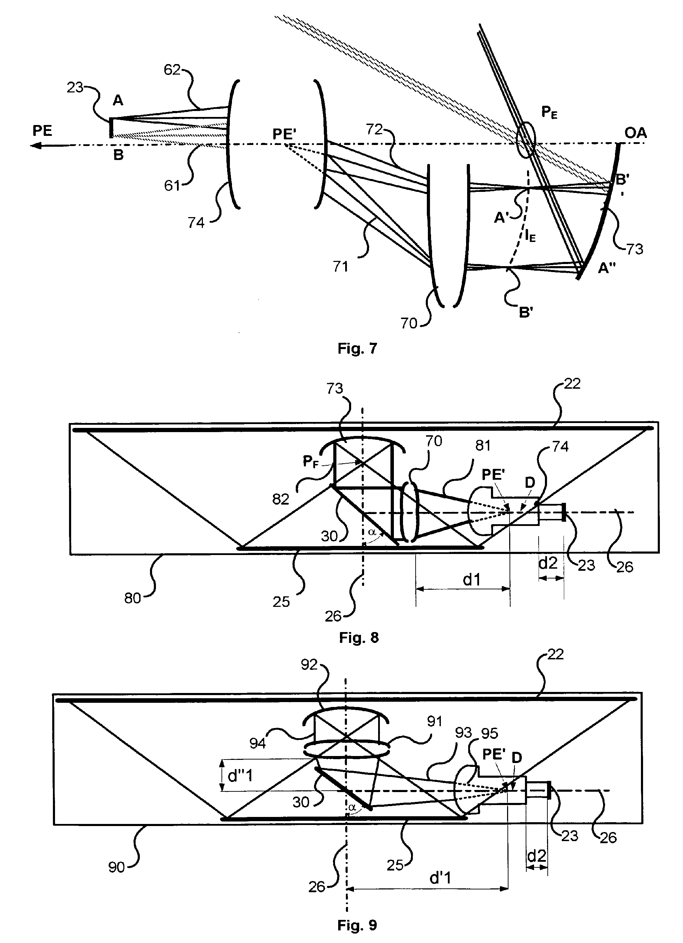

La **figure 7** présente schématiquement et sous forme dépliée la partie du rétroprojecteur 80, selon une variante de réalisation de l'invention.

Le rétroprojecteur 80 comprend des éléments similaires à des éléments des projecteurs 3 et 4 (notamment éléments 22, 23, 25 et 30). Ces éléments portent les mêmes références et ne seront pas décrits davantage.

Le rétroprojecteur 80 comprend un objectif comprenant un diaphragme $S$, d'un premier ensemble d'au moins une lentille 74 et d'un second ensemble d'au moins une lentille 70. Le second ensemble est positionné après le diaphragme $S$ sur le trajet du faisceau d'imagerie et est plus proche de l'image $IS$ que du diaphragme $S$. Préférentiellement, la distance $d1$ entre le second ensemble 70 et la pupille de sortie $PS'$ du premier ensemble 74 est supérieure ou égale à trois fois la distance $d2$ entre le premier ensemble 74 et la source d'imagerie 23.

La pupille de sortie $PS'$ correspond à une image du diaphragme $S$ formée par le premier ensemble de lentilles 74. Le second ensemble de lentilles 70 permet de positionner la pupille de sortie $PS$ de l'objectif du projecteur 80 sensiblement à l'infini. Ainsi, le second ensemble de lentilles 70 redresse les rayons du faisceau d'imagerie (par exemple les rayons 72 et 71 correspondant au points A et B) et permet de réduire la taille du miroir concave 73 qui remplace le miroir 21, sa forme étant par ailleurs similaire.

Le second ensemble de lentilles 70 effectue également des corrections optiques assumées par le miroir 21 selon d'autres modes de réalisation précédemment décrits. Il permet notamment de réduire l'astigmatisme et certaines distorsions optiques. Il permet en outre une augmentation de l'ouverture du faisceau (ouverture à 2.8). Le miroir 73 a une courbure qui permet alors essentiellement l'agrandissement de l'image IS et l'obtention d'une image plane dans le plan de projection.

Le miroir asphérique concave 73 a une forme dont la surface réfléchissante suit l'équation suivante :

$$Z(r) = \frac{r^2/R}{1 + \sqrt{1 - (1+c)(r/R)^2}} + a_1 r + a_2 r^2 + a_3 r^3 + a_4 r^4 + a_5 r^5 + a_6 r^6 + \ldots$$

où :

- $r$ représente la distance à l'axe optique pour un point donné, l'axe du miroir 74 étant positionné sur l'axe optique de l'objectif ;
- $Z$ représente la distance de ce point à un plan perpendiculaire à l'axe optique ;
- le coefficient $c$ est la conique de la surface ;
- le paramètre $R$ correspond au rayon de courbure de la surface ; et
- les paramètres $ai$ sont des coefficients d'asphéricité respectivement d'ordre $i$.

Le second ensemble 70 comprend une ou plusieurs lentilles et est, par exemple, constitué d'un ou de plusieurs ménisques (un ensemble avec plusieurs ménisques étant plus facile à réaliser). Préférentiellement, le second ensemble 70 a des propriétés optiques adaptées aux paramètres du miroir concave 73 ; ses éléments ont préférentiellement une forme qui suit une équation de surface asphérique comme présenté précédemment.

A titre illustratif, dans un mode de réalisation particulier, le rayon R du miroir concave 73 est égal à -56,202mm, les paramètres $c$, et $a1$ à $a8$ valent respectivement -3,32197 ; 0 ; 0 ; $-1,06.10^{-5}$ ; 0 ; $-2,20.10^{-9}$ ; $6.68.10^{-11}$ ; $-1,06.10^{-12}$ et $5.91.10^{-15}$.

Toujours à titre illustratif, on considère que l'ensemble 70 est constitué d'un ménisque. Le rayon R de la première surface (coté imageur) du ménisque de l'ensemble 70 est supposé infini, les paramètres c, et a1 à a8 valent respectivement 0 ; 0 ; -0.00811 ; $7.60.10^{-5}$ ; $-6.43.10^{-6}$ ; $1.57.10^{-7}$ ; $-1.53.10^{-9}$ ; 0 et 0. Le rayon R de la deuxième surface (coté imageur) du ménisque de l'ensemble 70 est supposé infini, les paramètres c, et a1 à a8 valent respectivement 0 ; 0 ; -0.01058 ; $-1.7710^{-5}$ ; $-2.88.10^{-6}$ ; $8.41.10^{-8}$ ; $-9.96.10^{-10}$ ; 0 et 0.

Le premier ensemble 74 comprend un groupe arrière d'une ou de plusieurs lentilles situées avant le diaphragme sur le trajet du faisceau d'imagerie. Selon des variantes de réalisation, il comprend également un groupe avant d'une ou de plusieurs lentilles situées après le diaphragme sur le trajet du faisceau d'imagerie.

Par ailleurs, une image IS est formée avant le miroir 73 et le miroir 73 associe la pupille de sortie PS à une pupille PF où les rayons du faisceau d'imagerie se croisent dans une zone relativement réduite. La forme du miroir 73 et l'agencement du second ensemble de lentilles 70 sont calculés pour créer une image IF correspondant à l'image IS sur un plan de projection où est situé l'écran de projection 22.

La **figure 8** illustre schématiquement une vue de dessus du rétroprojecteur 80.

Dans le projecteur 80, le second ensemble de lentilles 70 est positionné entre le miroir de repli 30 et le premier ensemble de lentilles 74. Ainsi, l'imageur 23 transmet un faisceau d'imagerie 81 à travers le premier ensemble de lentilles 74 vers le second ensemble de lentilles 70. Le second ensemble de lentilles 70 corrige le faisceau d'imagerie 81 en un faisceau d'imagerie 82 qui est réfléchi par le miroir de repli 30 vers le miroir concave 73.

L'axe optique du faisceau d'imagerie 81 est horizontal et parallèle au bas de l'image projetée sur l'écran de projection (comme le mode de réalisation du rétroprojecteur 3). Selon une variante de réalisation, l'axe optique du faisceau d'imagerie 81 est incliné comme l'axe du faisceau d'imagerie issu de l'objectif du rétroprojecteur 4, le miroir 30 étant remplacé par le miroir 40 du rétroprojecteur 4 tel qu'illustré en figure 4.

La **figure 9** illustre schématiquement une vue de dessus d'un rétroprojecteur 90 correspondant à une variante du rétroprojecteur 80.

Le rétroprojecteur 90 comprend des éléments similaires aux éléments du rétroprojecteur 80, le miroir 73, le premier ensemble de lentilles 74 et le second ensemble de lentilles 70 étant remplacés respectivement par un miroir concave 92, un premier ensemble d'au moins une lentille 95 et un second ensemble d'au moins une lentille 91. Ces éléments similaires portent les mêmes références et ne seront pas décrits davantage.

L'objectif du rétroprojecteur 90 comprend donc un diaphragme S, le premier ensemble de lentilles 95 et le second ensemble de lentilles 91. Le second ensemble 91 est positionné après le diaphragme *S* sur le trajet du faisceau d'imagerie et est plus proche de l'image *IS* que du diaphragme S. Préférentiellement, la distance optique entre le second ensemble 91 (correspondant à la somme des distances *d'1* et *d''1*) et la pupille de sortie PS' du premier ensemble 95 est supérieure ou égale à trois fois la distance d2 entre le premier ensemble 74 et la source d'imagerie 23.

Le miroir concave 92 et le second ensemble d'au moins une lentille 91 assurent les mêmes fonctions que respectivement le miroir 73 et le premier ensemble de lentilles 74. La forme du miroir 92 et les caractéristiques optiques du second ensemble de lentilles 91 sont adaptées à une proximité de ces deux éléments.

Dans le projecteur 90, le second ensemble 91 est positionné entre le miroir de repli 30 et le miroir concave 92. Ainsi, l'imageur 23 transmet un faisceau d'imagerie 93 à travers le premier ensemble de lentilles 95, le faisceau 93 étant réfléchi par le miroir de repli 30 vers le second ensemble de lentilles 91. Le second ensemble de lentilles 91 corrige le faisceau d'imagerie 93 en un faisceau d'imagerie 92 qui est transmis vers le miroir concave 73.

L'axe optique du faisceau d'imagerie 93 est horizontal et parallèle au bas de l'image projetée sur l'écran de projection (comme le mode de réalisation du rétroprojecteur 3). Selon une variante de réalisation, l'axe optique du faisceau d'imagerie 93 avant d'être réfléchi par l'un des miroirs de repli plan ou concave est incliné par rapport au plan de projection.

Selon une variante de réalisation du rétroprojecteur 90, le miroir plan de repli 30 est remplacé par deux miroirs similaires aux miroirs 40 et 42 du rétroprojecteur 4, ces deux miroirs étant positionnés entre le premier ensemble de lentilles 95 et le second ensemble de lentilles 91 afin de réduire, l'encombrement du rétroprojecteur. Un tel mode de réalisation est compatible avec un miroir concave 92 similaire au miroir 73, et un second ensemble de lentilles 91 constitué d'un seul ménisque, similaire à l'ensemble 70, des caractéristiques précises de ces éléments ayant été mentionnées précédemment à titre illustratif.

La **figure 10** présente un vidéo projecteur frontal 100 selon une variante de réalisation de l'invention.

Le projecteur 100 comprend les éléments optiques du projecteur 3 à l'exception de l'écran de projection 22 et du miroir de repli 25.

Plus précisément, le projecteur 100 comprend des éléments similaires aux éléments 20, 23, 30 et 21 du projecteur 3 qui portent les mêmes références et ne seront pas décrits davantage. Le miroir concave 21 du projecteur 100 émet un faisceau d'imagerie 102 vers un écran 101 situé dans un plan de projection perpendiculaire à l'axe optique du système déplié, le miroir concave 21 construisant une seconde image dans le plan de projection à partir d'une première image située entre l'objectif 20 et le miroir 21. On note que le plan de projection peut être très proche du projecteur 100 : la distance séparant le centre optique du miroir concave 21 du plan de projection est préférentiellement inférieure à 1m et encore plus préférentiellement à 50 cm.

Par ailleurs, le chin *h* (distance séparant l'image projetée sur l'écran 101 et la partie la plus basse du projecteur 100 (en supposant une image projetée de bas en haut) est relativement faible : il est préférentiellement inférieur au cinquième de la hauteur de l'image projetée.

Par ailleurs, les variantes des rétro-projecteurs suivant différents modes de réalisation de l'invention tels qu'exposés précédemment peuvent être adaptées à des projecteurs frontaux, l'homme du métier remplaçant l'écran de rétroprojection par un écran de projection frontale et supprimant éventuellement le ou les miroirs de repli situés après le miroir concave sur le trajet du faisceau d'imagerie.

Selon un autre aspect de l'invention, un masque est positionné au voisinage d'une zone pupillaire de taille réduite, la zone étant placée entre l'objectif et l'écran sur le trajet du faisceau d'imagerie. Un tel masque peut être mis en oeuvre lorsque la pupille de sortie du système est réelle. Le masque permet notamment de limiter, voire d'éliminer, les rayons parasites et/ou d'empêcher la poussière de se déposer sur l'objectif, le miroir concave et les éléments optiques proches de l'objectif. Comme indiqué précédemment, une telle pupille PF est notamment obtenue, lorsque le projecteur met en oeuvre un miroir concave pour construire une image sur un plan de projection.

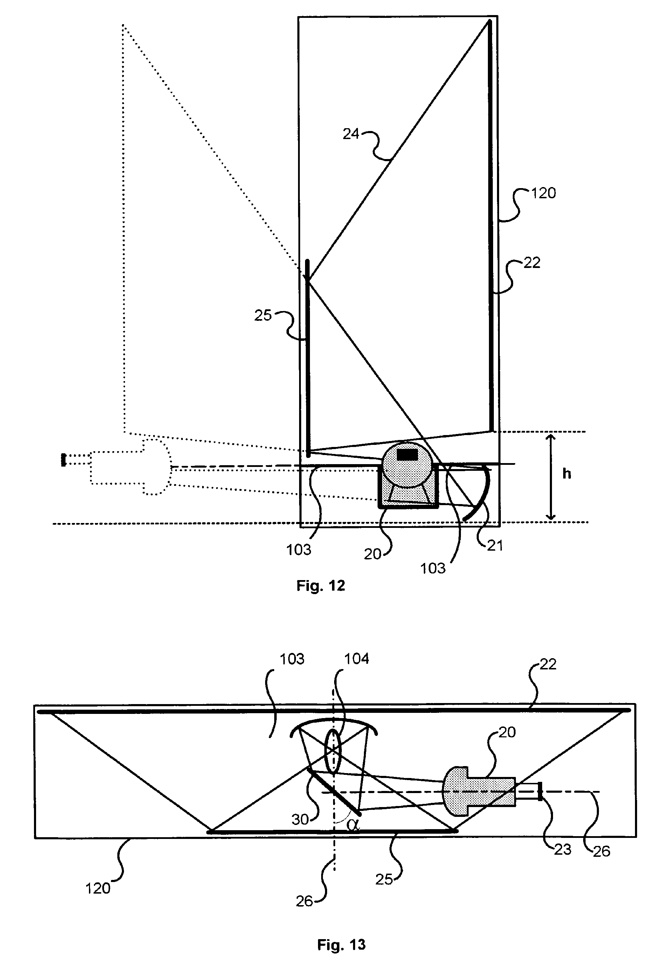

Les **figures 12 et 13** présentent un rétro-projecteur 120 respectivement selon une vue de coté et une vue de dessus. Le rétro-projecteur 120 comprend tous les éléments du rétro-projecteur 3 qui portent les mêmes références et ne seront pas décrits davantage ainsi qu'un masque 103.

Le masque 103 est avantageusement une plaque de verre ou de plastique qui comprend une zone transparente 104 permettant le passage du faisceau de projection 24. L'épaisseur du masque 103 est choisie comme étant la plus faible possible et préférentiellement inférieure à 2 mm et encore plus préférentiellement inférieure ou égale à 1 mm.

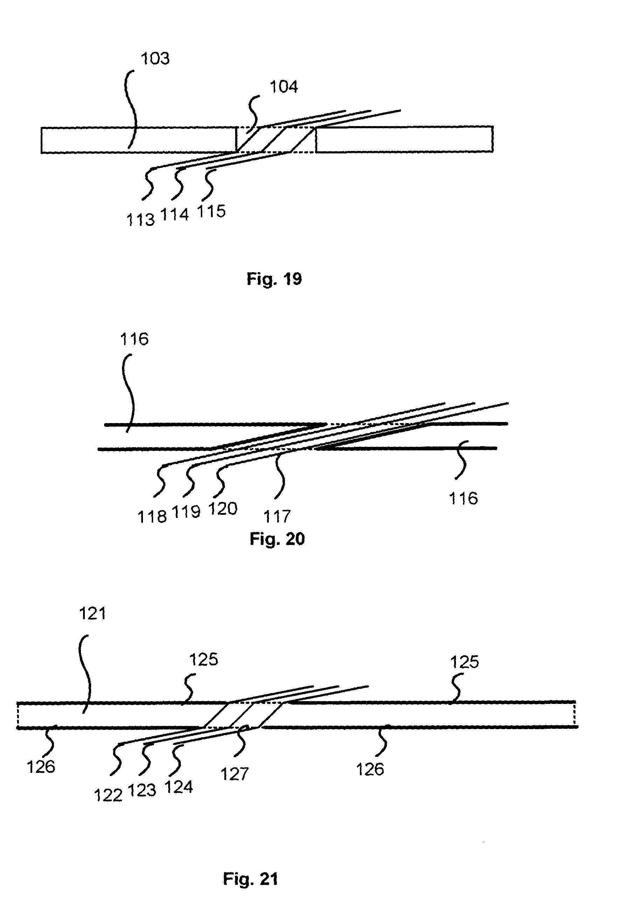

Tel qu'illustré en **figure 19**, des rayons 113 à 115 du faisceau 24 traversent la zone transparente 104 en étant réfractés par le masque 103. En dehors de la zone transparente 104, le masque 103 est noir et absorbe les rayons parasites. La zone périphérique noire correspond à une zone teintée soit dans la masse du masque soit à un traitement sur l'une ou les deux faces du masque. Préférentiellement, la zone transparente est traitée contre les reflets selon des techniques bien connues de l'homme du métier. Le masque 103 s'étend préférentiellement jusqu'au limite du coffret du projecteur et isole ainsi des poussières l'objectif, le miroir concave et l'imageur correspondant et/ou élimine (ou réduit) les parasites en provenance de ces éléments ou de l'extérieur. La limite de la zone transparente du masque 103 illustré comprend des parois normales à la surface du masque. Selon une variante de réalisation avantageuse du masque 103, la limite de la zone transparente du masque comprend des parois inclinées de sorte à se rapprocher du trajet du faisceau d'imagerie.

Selon une variante de réalisation, la zone transparente du masque est inclinée par rapport à l'axe du faisceau d'imagerie de zone à réduire son angle d'incidence et donc réduire les éventuelles réflexion du faisceau d'imagerie sur la zone transparente.

Ainsi, la **figure 21** illustre un masque 121 qui est une variante du masque 103. Le masque 121 comprend une face supérieure 125 noire et une face inférieure 126 noire entourant une zone transparente 127. Les faces 125 et 126 sont décalées suivant une direction normale au masque 121 de sorte à englober au plus juste les rayons extrêmes 113 et 115 qui sont tangents ou proches (préférentiellement à une distance inférieure ou égale à 2mm) des faces 125 et 126. Ainsi, selon le mode de réalisation illustré, les faces 125 et 126 ne sont pas décalées et la limite de la zone transparente du masque 126 comprend des parois inclinées de sorte à se rapprocher du trajet du faisceau d'imagerie. Selon une variante de réalisation du masque, les parois de la zone transparente sont normales à la surface du masque. Selon une autre variante de réalisation, seule une face du masque est noire. Cette face est préférentiellement du coté de la face d'entrée du faisceau d'imagerie.

Selon une variante de réalisation des masques 103 et 116, la zone transparente est en verre ou en plastiques et la zone noire est dans une autre matière quelconque.

La **figure 20** illustre un masque noir 116 (variante du masque 103) avec une zone transparente 117 évidée. Les rayons 113 à 115 du faisceau 24 traversent la zone transparente 117 sans déviation, ni absorption.

La zone transparente des masques 103, 121 et 116 est préférentiellement ajustée à la taille du faisceau 24 et située proche de la zone pupillaire (ou pupille PF du système comprenant l'objectif et le miroir concave) située entre l'objectif et le plan de projection (typiquement à une distance inférieure ou égale à 5 mm de la zone pupillaire PF correspondant à la pupille de sortie du système comprenant l'objectif et le miroir concave).

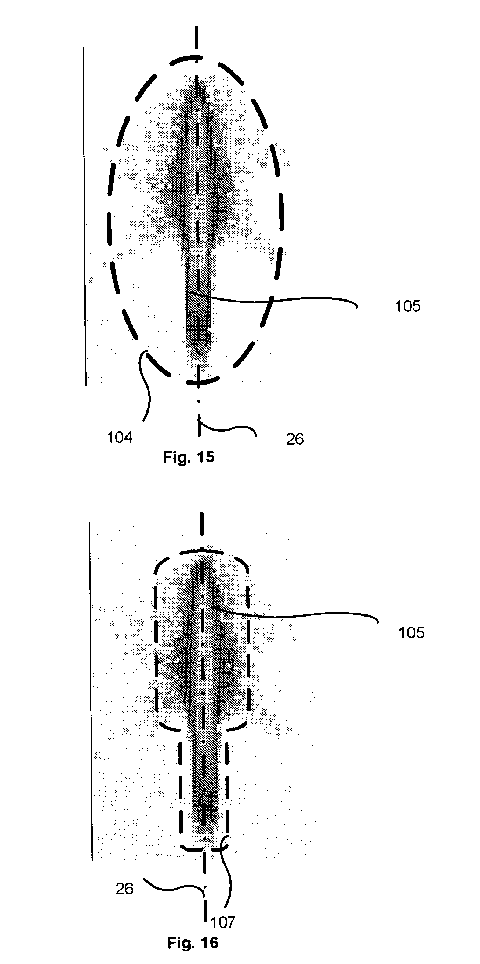

Afin de faciliter la fabrication des masques, la zone transparente a une forme géométrique simple. Ainsi, la **figure 15** illustre la zone transparente 104 entourant l'empreinte de la zone pupillaire PF 105, lorsque le masque est placé sur l'axe optique 26. L'empreinte de la zone pupillaire 105 (ou du faisceau 24) est symétrique selon l'axe 26 et plutôt allongée suivant cet axe. Ainsi, à titre illustratif, la zone transparente est elliptique, centrée sur l'axe 106 dont le grand axe (placé sur l'axe 106) et le petit axe ont respectivement pour longueur environ 50 mm et 30 mm.

Selon une variante de masque, illustrée en **figure 16**, une zone transparente 107 englobe plus finement l'empreinte de la zone pupillaire 105. Ainsi, une extrémité de la zone 107 est plus fine (par exemple de largeur 10 mm) que l'autre l'extrémité (par exemple de largeur 20 mm).

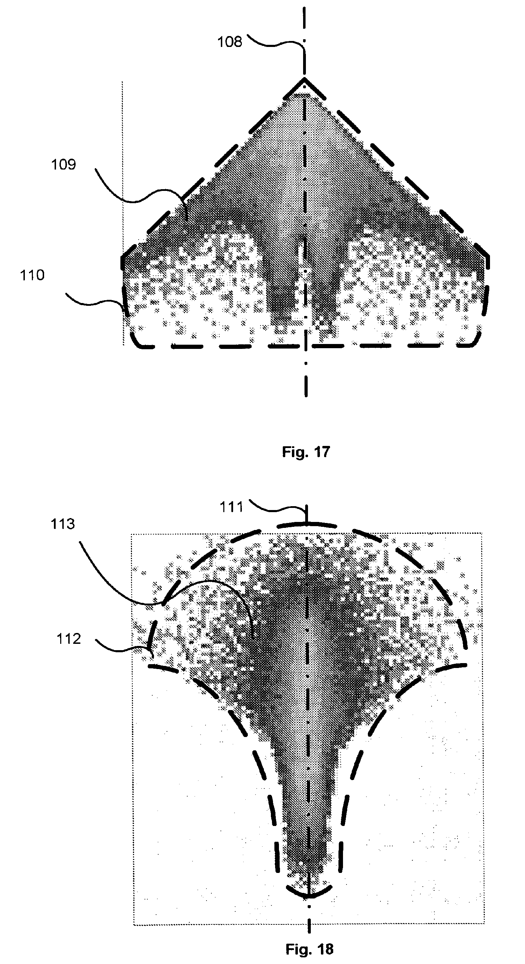

La **figure 17** illustre une zone transparente 110 de masque situé 5mm au dessus de l'axe 26 à proximité de la zone pupillaire PF. L'empreinte 109 du faisceau 24 est plus grande que celle illustrée en regard des figures 14 et 15 et a une forme de pointe de flèche. La zone transparente 110 suit également au plus juste la forme de l'empreinte 109.

La **figure 18** illustre une zone transparente 112 de masque situé 2mm en dessous de l'axe 26 à proximité de la zone pupillaire PF. L'empreinte 113 du faisceau 24 est plus grande que celle illustrée en regard des figures 14 et 15 et a une forme évasée à une extrémité. La zone transparente 112 suit également au plus juste la forme de l'empreinte 113.

La **figure 14** présente un projecteur frontal 106 selon une vue de coté. Le projecteur 106 comprend tous les éléments du projecteur 100 qui portent les mêmes références et ne seront pas décrits davantage ainsi qu'un masque 105. Le masque 105 possède une zone transparente laissant passer le faisceau d'illumination qui, selon différentes variantes, est respectivement similaire aux zones 104, 107, 110 et 112, et une zone noire absorbant les rayons parasites et s'étendant jusqu'au coffret en englobant les éléments optiques du projecteur 106, cette zone noire étant similaire à la zone noire du masque 103.

Les masques illustrés en regard des figures 12 à 21 sont préférentiellement plans. Selon d'autres modes de réalisation, la zone noire et, le cas échéant, la zone transparente pleine ont des formes variées et sont tels qu'ils englobent tout ou partie des éléments optiques dont l'objectif et que la zone noire ne coupe pas le faisceau d'illumination de sorte à ne pas réduire la luminosité du faisceau projeté.

Lorsque la zone transparente est pleine, une partie du faisceau peut être réfléchie par la partie transparente. Selon une variante de réalisation, les rayons parasites ainsi obtenus peuvent être éliminés, par exemple, par une paroi sensiblement normale au masque et placée derrière la zone transparente sur le trajet de ces rayons parasites en dehors du trajet du faisceau de projection utile.

Selon une variante de réalisation du projecteur, l'imageur est décentré par rapport aux cas illustrés précédemment, ce qui permet une image projetée plus haute. De cette manière, on a également plus de liberté pour positionner le masque et/ou plus de liberté sur la forme du masque.

Bien entendu, l'invention ne se limite pas aux modes de réalisation décrits précédemment.

En particulier, l'invention s'applique à tout type de projecteur frontal ou rétro-projecteur.

L'homme du métier pourra, en outre, définir l'objectif et le miroir concave de repli qui construit une seconde image sur un plan de projection à partir d'une première image positionnée avant le miroir concave, pour notamment adapter les corrections d'astigmatismes et de distorsions optiques selon des critères particuliers et les répartir entre les différents optiques du système de projection.

De plus, l'homme du métier, pourra adapter le repli du faisceau d'imagerie en fonction de contraintes d'encombrement propres au système de projection désiré.

## Revendications

1. Système de projection (3, 4, 100, 80, 90) comprenant une source d'imagerie (23) et un objectif (20) adaptés à produire un faisceau d'imagerie et construisant une première image (IS) positionnée après l'objectif, ladite première image étant décentrée par rapport à l'axe optique dudit objectif, **caractérisé en ce qu'**il comprend un miroir concave (21, 73, 92) qui est positionné après ladite première image sur le trajet dudit faisceau d'imagerie et qui construit une seconde image sur un plan de projection (22, 101) à partir de ladite première image, ledit miroir concave possédant un axe optique positionné sur l'axe optique de l'objectif, la pupille de sortie (PF) du système comprenant l'objectif et le miroir concave étant située entre le miroir concave et le plan de projection.

2. Système selon la revendication 1, **caractérisé en ce que** ledit miroir concave est asphérique.

3. Système selon l'une quelconque des revendications 1 et 2, **caractérisé en ce qu'**il comprend au moins un premier miroir de repli plan (30, 40, 42) entre ledit objectif et ledit miroir concave.

4. Système selon l'une quelconque des revendications 1 à 3, **caractérisé en ce que** ledit objectif comprend :

   - un diaphragme ($S$) ;
   - un premier ensemble de lentilles (74, 95) ; et
   - un second ensemble de lentilles (70, 91),

   le second ensemble étant positionné après ledit diaphragme sur le trajet dudit faisceau d'imagerie et étant plus proche de ladite première image que dudit diaphragme.

5. Système selon la revendication 4, **caractérisé en ce que** la distance ($d1$) entre ledit second ensemble et la pupille de sortie ($PS'$) dudit premier ensemble est supérieure ou égale à trois fois la distance ($d2$) entre ledit premier ensemble et ladite source d'imagerie.

6. Système selon l'une quelconque des revendications 4 et 5, **caractérisé en ce que** ledit second ensemble de lentilles comprend au moins une lentille de type ménisque.

7. Système selon l'une quelconque des revendications 4 à 6, dépendant de la revendication 3, **caractérisé en ce que** ledit second ensemble (70) est positionné entre ledit premier ensemble et ledit premier miroir de repli.

8. Système selon l'une quelconque des revendications 4 à 7, dépendant de la revendication 3, **caractérisé en ce que** ledit second ensemble (91) est positionné entre ledit premier miroir de repli et ledit miroir concave.

9. Système selon l'une quelconque des revendications 1 à 8, **caractérisé en ce que**, dans une représentation sans miroir de repli plan du système, l'axe optique dudit faisceau d'imagerie est perpendiculaire audit plan de projection étant vertical lorsque ledit faisceau d'imagerie frappe ledit miroir concave.

10. Système selon l'une quelconque des revendications 1 à 9, **caractérisé en ce qu'**il comprend un écran de rétroprojection (22) dans ledit plan de projection.

11. Système selon la revendication 10, **caractérisé en ce qu'**il comprend en outre au moins un deuxième miroir de repli plan (25) positionné sur le trajet dudit faisceau d'imagerie entre ledit miroir concave et ledit écran de rétroprojection.

12. Système selon l'une quelconque des revendications 1 à 9, **caractérisé en ce qu'**il comprend des moyens de projection frontale sur ledit plan de projection.

13. Système selon l'une quelconque des revendications 1 à 12, **caractérisé en ce que** ledit objectif comprend un groupe avant comprenant trois lentilles, la lentille située au milieu ayant une puissance opposée aux lentilles extrêmes.

**14.** Système selon l'une quelconque des revendications 1 à 13, **caractérisé en ce qu'**il comprend un masque comprenant une zone noire absorbant les rayons parasites et une zone transparente placée sur le trajet du faisceau d'imagerie après le miroir concave.

**15.** Système selon la revendication 14, **caractérisé en ce que** ladite zone transparente est pleine.

**16.** Système selon la revendication 14, **caractérisé en ce que** ledit masque comprend un évidement formant ladite zone transparente.

**17.** Système selon l'une quelconque des revendications 14 à 16, **caractérisé en ce que** ladite zone transparente est positionnée à proximité de la pupille de sortie (PF) du système comprenant l'objectif et le miroir concave.

**Claims**

**1.** A projection system (3, 4, 100, 80, 90) comprising an imaging source (23) and an objective (20) that are designed to produce an imaging beam and constructing a first image (*IS*) positioned after the objective, said first image being off-axis relative to the optical axis of said objective,
**characterized in that** it includes a concave mirror (21, 73, 92) which is positioned after said first image in the path of said imaging beam and which constructs a second image in a plane of projection (22, 101) from said first image, said concave mirror possessing an optical axis positioned on the optical axis of the objective, the exit pupil (*PF*) of the system comprising the objective and the concave mirror being situated between the concave mirror and the plane of projection.

**2.** The system as claimed in claim 1, **characterized in that** said concave mirror is an aspherical mirror.

**3.** The system as claimed in either of claims 1 and 2, **characterized in that** it includes at least a first plane folding mirror (30, 40, 42) between said objective and said concave mirror.

**4.** The system as claimed in any one of claims 1 to 3, **characterized in that** said objective comprises:

- a diaphragm (*D*);
- a first lens group (74, 95); and
- a second lens group (70, 91),

the second lens group being positioned after said diaphragm in the path of said imaging beam and being closer to said first image than said diaphragm.

**5.** The system as claimed in claim 4, **characterized in that** the distance ($d_1$) between said second lens group and the exit pupil (*PS'*) of said first lens groups is at least three times the distance ($d_2$) between said first lens group and said imaging source.

**6.** The system as claimed in either of claims 4 and 5, **characterized in that** said second lens group includes at least one meniscus type lens.

**7.** The system as claimed in any one of claims 4 to 6, dependent on claim 3, **characterized in that** said second lens group (70) is positioned between said first lens group and said first folding mirror.

**8.** The system as claimed in any one of claims 4 to 7, dependent on claim 3, **characterized in that** said second lens group (91) is positioned between said first folding mirror and said concave mirror.

**9.** The system as claimed in any one of claims 1 to 8, **characterized in that**, in a representation of the system without a folding mirror, the optical axis of said imaging beam is perpendicular to said plane of projection, being vertical when said imaging beam strikes said concave mirror.

**10.** The system as claimed in any one of claims 1 to 9, **characterized in that**, it includes a rear-projection screen (22) in said plane of projection.

11. The system as claimed in claim 10, **characterized in that** it further includes at least a second plane folding mirror (25) positioned in the path of said imaging beam between said concave mirror and said rear-projection screen.

12. The system as claimed in any one of claims 1 to 9, **characterized in that**, it includes means for front projection on said plane of projection.

13. The system as claimed in any one of claims 1 to 12, **characterized in that** said objective comprises a front group comprising three lenses, the lens located in the middle having an opposite power to the outer lenses.

14. The system as claimed in any one of claims 1 to 13, **characterized in that** it includes a mask comprising a black zone that absorbs the parasitic rays and a transparent zone placed in the path of the imaging beam after the concave mirror.

15. The system as claimed in claim 14, **characterized in that** said transparent zone is a full zone.

16. The system as claimed in claim 14, **characterized in that** said mask includes a cut-out forming said transparent zone.

17. The system as claimed in any one of claims 14 to 16, **characterized in that** said transparent zone is positioned near the exit pupil (*PF*) of the system comprising the objective and the concave mirror.

**Patentansprüche**

1. Projektionssystem (3, 4, 100, 80, 90), das eine bildgebende Quelle (23) und ein Objektiv (20) umfasst, welche geeignet sind, ein bildgebendes Strahlenbündel zu erzeugen, und das ein erstes, nach dem Objektiv positioniertes Bild (IS) aufbaut, wobei das erste Bild in Bezug auf die optische Achse des Objektivs dezentriert ist, **dadurch gekennzeichnet, dass** es einen Konkavspiegel (21, 73, 92) umfasst, der nach dem ersten Bild auf dem Weg des bildgebenden Strahlenbündels angeordnet ist und ausgehend von dem ersten Bild ein zweites Bild auf einer Projektionsebene (22, 101) aufbaut, wobei der Konkavspiegel eine optische Achse aufweist, die auf der optischen Achse des Objektivs positioniert ist, wobei die Austrittspupille (PF) des Systems mit dem Objektiv und dem Konkavspiegel zwischen dem Konkavspiegel und der Projektionsebene angeordnet ist.

2. System nach Anspruch 1, **dadurch gekennzeichnet, dass** der Konkavspiegel asphärisch ist.

3. System nach einem beliebigen der Ansprüche 1 und 2,
**dadurch gekennzeichnet, dass** es mindestens einen ersten ebenen Faltspiegel (30, 40, 42) zwischen dem Objektiv und dem Konkavspiegel umfasst.

4. System nach einem beliebigen der Ansprüche 1 bis 3,
**dadurch gekennzeichnet, dass** das Objektiv Folgendes umfasst:

   - eine Blende (D),
   - eine erste Menge von Linsen (74, 95) und
   - eine zweite Menge von Linsen (70, 91),

wobei die erste Menge nach der Blende auf dem Weg des bildgebenden Strahlenbündels angeordnet ist und dem ersten Bild näher ist als der Blende.

5. System nach Anspruch 4, **dadurch gekennzeichnet, dass** der Abstand (*d1*) zwischen der zweiten Menge und der Austrittspupille (*PS'*) der ersten Menge größer als oder gleich dem Dreifachen des Abstands (*d2*) zwischen der ersten Menge und der bildgebenden Quelle ist.

6. System nach einem beliebigen der Ansprüche 4 und 5,
**dadurch gekennzeichnet, dass** die zweite Menge von Linsen mindestens eine Meniskuslinse umfasst.

7. System nach einem beliebigen der Ansprüche 4 bis 6, abhängig von Anspruch 3, **dadurch gekennzeichnet, dass** die zweite Menge (70) zwischen der ersten Menge und dem ersten Faltspiegel angeordnet ist.

8. System nach einem beliebigen der Ansprüche 4 bis 7, abhängig von Anspruch 3, **dadurch gekennzeichnet, dass** die zweite Menge (91) zwischen dem ersten Faltspiegel und dem Konkavspiegel angeordnet ist.

9. System nach einem beliebigen der Ansprüche 1 bis 8, **dadurch gekennzeichnet, dass** in einer Ausgestaltung des Systems ohne ebenen Faltspiegel die optische Achse des bildgebenden Strahlenbündels senkrecht zu der Projektionsebene ist, die vertikal ist, wenn das bildgebende Strahlenbündel auf den Konkavspiegel trifft.

10. System nach einem beliebigen der Ansprüche 1 bis 9, **dadurch gekennzeichnet, dass** es einen Rückprojektionsschirm (22) in der Projektionsebene umfasst.

11. System nach Anspruch 10, **dadurch gekennzeichnet, dass** es ferner mindestens einen zweiten ebenen Faltspiegel (25) umfasst, der auf dem Weg des bildgebenden Strahlenbündels zwischen dem Konkavspiegel und dem Rückprojektionsschirm angeordnet ist.

12. System nach einem beliebigen der Ansprüche 1 bis 9, **dadurch gekennzeichnet, dass** es Mittel für die Frontprojektion auf die Projektionsebene umfasst.

13. System nach einem beliebigen der Ansprüche 1 bis 12, **dadurch gekennzeichnet, dass** das Objektiv eine Vordergruppe umfasst, die drei Linsen umfasst, wobei die mittlere Linse eine Brechkraft aufweist, die entgegengesetzt ist zu den Endlinsen.

14. System nach einem beliebigen der Ansprüche 1 bis 13, **dadurch gekennzeichnet, dass** es eine Maske mit einem schwarzen Bereich, der die Störstrahlen absorbiert, und einem durchsichtigen Bereich, der sich auf dem Weg des bildgebenden Strahlenbündels nach dem Konkavspiegel befindet, umfasst.

15. System nach Anspruch 14, **dadurch gekennzeichnet, dass** der durchsichtige Bereich voll ist.

16. System Anspruch 14, **dadurch gekennzeichnet, dass** die Maske eine Aushöhlung aufweist, die den durchsichtigen Bereich bildet.

17. System nach einem beliebigen der Ansprüche 14 bis 16, **dadurch gekennzeichnet, dass** der durchsichtige Bereich in der Nähe der Austrittspupille (PF) des Systems mit dem Objektiv und dem Konkavspiegel angeordnet ist.

12

1

15

14

11

H

16 13 10

A

**ART ANTERIEUR**

**Fig. 1**

**Fig. 2**

**Fig. 11**

**Fig. 3a**

**Fig. 3b**

**Fig. 4**

**Fig. 5**

**Fig. 6**

**Fig. 10**

Fig. 7

Fig. 8

Fig. 9

**Fig. 12**

**Fig. 13**

**Fig. 14**

**Fig. 22**

105

104        26

**Fig. 15**

105

26        107

**Fig. 16**

108

109

110

**Fig. 17**

111

113

112

**Fig. 18**

**Fig. 19**

**Fig. 20**

**Fig. 21**

## RÉFÉRENCES CITÉES DANS LA DESCRIPTION

### Documents brevets cités dans la description

- EP 1203977 A1
- US 6485145 B1
- US 6771427 B1